# EUROPÄISCHE PATENTSCHRIFT

(11) **EP 4 341 566 B1**
(45) Veröffentlichungstag und Bekanntmachung des Hinweises auf die Patenterteilung: **23.10.2024**
(21) Anmeldenummer: 22773423.3
(22) Anmeldetag: 02.09.2022
(51) Int. Cl.: F16B 12/14

(54) **VERBINDUNGSBESCHLAG ZUM VERBINDEN ZWEIER MÖBELTEILE SOWIE ZUGEHÖRIGER VERBINDUNGSBESCHLAG UND ZUGEHÖRIGE MÖBELANORDNUNG**
CONNECTION FITTING FOR CONNECTING TWO FURNITURE PARTS, CORRESPONDING CONNECTION FITTING AND CORRESPONDING FURNITURE ASSEMBLY
RACCORD DE CONNEXION POUR RACCORDER DEUX PARTIES MEUBLE, RACCORD DE CONNEXION CORRESPONDANT ET ENSEMBLE MEUBLE CORRESPONDANT

(30) Priorität: 07.10.2021 DE 202021105426 U
(43) Veröffentlichungstag der Anmeldung: 27.03.2024
(73) Patentinhaber: Häfele SE & Co KG, 72202 Nagold (DE)
(72) Erfinder: BIRKNER, Robert, 12524 Berlin (DE); ARNOLD, Lorenz, 6314 Unterägeri (CH)
(74) Vertreter: Kohler Schmid Möbus Patentanwälte
(86) Internationale Anmeldenummer: PCT/EP2022/074415
(87) Internationale Veröffentlichungsnummer: WO 2023/057139

(56) Entgegenhaltungen:
- WO-A1-2019/053041
- CN-A- 107 407 306
- DE-A1- 102009 011 845

## Beschreibung

Die Erfindung betrifft ein Beschlagteil eines Verbindungsbeschlags zum Verbinden zweier Teile, insbesondere zweier Möbelteile, aufweisend einen Grundköper mit einer Längsachse, mit mindestens einer Längsseite, die eine plane Befestigungsfläche zur Anlage und Befestigung an einem zu verbindenden Teil ausbildet, und mit mindestens einer Montagefläche zur Anlage an einer Gegenmontagefläche eines weiteren Beschlagteils des Verbindungsbeschlags. Die Erfindung betrifft auch einen Verbindungsbeschlag mit mindestens zwei solchen Beschlagteilen sowie eine Anordnung, insbesondere Möbelanordnung, mit zwei Teilen, insbesondere Möbelteilen, die mittels des erfindungsgemäßen Verbindungsbeschlags miteinander verbunden sind.

Solche zweiteiligen Verbindungsbeschläge zum Verbinden zweier Möbelteile sind hinlänglich bekannt.

So ist beispielsweise aus CN 107 407 306 A ein Beschlagteil eines Verbindungsbeschlags zum Verbinden zweier Teile bekannt. Das Beschlagteil weist einen Grundkörper mit einer Längsachse, mit einer Längsseite, die eine plane Befestigungsfläche zur Anlage und Befestigung an einem zu verbindenden Teil ausbildet, und mit einer Montagefläche zur Anlage an einer Gegenmontagefläche eines weiteren Beschlagteils auf. Der Grundkörper umfasst eine an einem ersten Längsende angeordnete Montagefläche, die zu der Befestigungsfläche parallel oder winklig angeordnet ist und ein Rastelement aufweist, eine durch einen Nutboden einer ein- oder beidseitig offenen Quernut gebildete Montagefläche, die zu der Befestigungsfläche parallel oder winklig angeordnet ist und ein Rastelement aufweist, und eine an einer weiteren Längsseite des Grundkörpers gebildete Montagefläche, die zu der Befestigungsfläche parallel oder rechtwinklig angeordnet ist und, gesehen in Querrichtung, ein kammförmiges Oberflächenprofil aufweist.

Der Erfindung liegt demgegenüber die Aufgabe zugrunde, ein universales Beschlagteil und einen zugehörigen Verbindungsbeschlag anzugeben, mit dem zwei Teile in möglichst vielen unterschiedlichen Orientierungen aneinander befestigt werden können.

Diese Aufgabe wird erfindungsgemäß durch ein Beschlagteil eines Verbindungsbeschlags zum Verbinden zweier Teile, insbesondere zweier Möbelteile, gelöst, aufweisend einen Grundkörper mit einer Längsachse, mit mindestens einer Längsseite, die eine plane Befestigungsfläche zur Anlage und Befestigung an einem zu verbindenden Teil ausbildet, und mit mindestens einer Montagefläche zur Anlage an einer Gegenmontagefläche eines weiteren Beschlagteils des Verbindungsbeschlags, wobei der Grundkörper erfindungsgemäß mindestens eine der folgenden Montageflächen aufweist:
- eine an einem ersten Längsende des Grundkörpers angeordnete, erste Montagefläche, die zu der Befestigungsfläche parallel oder winklig, insbesondere rechtwinklig, angeordnet ist und mindestens ein Rastelement aufweist,
- eine an einem zweiten Längsende des Grundkörpers angeordnete, zweite Montagefläche, die gegenüber der Befestigungsfläche um die Längsachse oder eine dazu parallele Achse geneigt angeordnet ist und mindestens ein Rastelement aufweist,
- eine durch einen Nutboden einer ein- oder beidseitig offenen Quernut des Grundkörpers gebildete, dritte Montagefläche, die zu der Befestigungsfläche parallel oder winklig, insbesondere rechtwinklig, angeordnet ist und mindestens ein Rastelement aufweist, und
- eine an einer weiteren Längsseite des Grundkörpers gebildete, vierte Montagefläche, die zu der Befestigungsfläche parallel oder rechtwinklig angeordnet ist und, gesehen in Querrichtung, ein kammförmiges Oberflächenprofil aufweist, das abwechselnd hohe und tiefe Profilabsätze mit jeweils gleicher Profilbreite aufweist, und wobei der Grundkörper zumindest abschnittsweise quaderförmig mit vier Längsseiten ausgebildet ist, wobei eine, mehrere oder alle vier Längsseiten jeweils eine Befestigungsfläche ausbilden.

Erfindungsgemäß kann der Grundkörper eine, zwei, drei oder alle vier Montageflächen aufweisen.

Die Erfindung betrifft auch einen Verbindungsbeschlag mit zwei wie oben ausgebildeten, insbesondere baugleichen Beschlagteilen.

Die Erfindung betrifft schließlich auch eine Anordnung, insbesondere Möbelanordnung, mit zwei Teilen, insbesondere Möbelteilen, die mittels eines wie oben ausgebildeten Verbindungsbeschlags miteinander verbunden sind, wobei ein erstes Beschlagteil des Verbindungsbeschlags mit seiner Befestigungsfläche an dem einen, ersten Teil anliegt und daran befestigt ist und ein zweites Beschlagteil des Verbindungsbeschlags mit seiner Befestigungsfläche an dem anderen, zweiten Teil anliegt und daran befestigt ist und wobei die erste, die zweite oder die dritte Montagefläche des ersten Beschlagteils und die erste, die zweite oder die dritte Montagefläche des zweiten Beschlagteils aneinander anliegen und mittels der Rastelemente miteinander verrastet sind oder die vierte Montagefläche des ersten Beschlagteils und die vierte Montagefläche des zweiten Beschlagteils aneinander anliegen und mittels der kammförmigen Oberflächenprofile ineinandergreifen. Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen.

Es zeigen:
- Fign. 1a-1f: ein erfindungsgemäßes Beschlagteil in zwei perspektivischen Ansichten auf unterschiedliche Längsseiten des Beschlagteils (Fign. 1a, 1b), in zwei Draufsichten auf unterschiedliche Längsseiten des Beschlagteils (Fign. 1c, 1d) und in zweiten Seitenansichten der beiden Stirnseiten des Beschlagteils (Fign. 1e, 1f);
- Fign. 2a-2f: einen erfindungsgemäßen Verbindungsbeschlag mit zwei oder drei jeweils in unterschiedlicher Winkelausrichtung miteinander verbundenen erfindungsgemäßen Beschlagteilen;
- Fig. 3: einen erfindungsgemäßen Verbindungsbeschlag mit zwei ineinandergesteckten erfindungsgemäßen Beschlagteilen;
- Fig. 4: einen erfindungsgemäßen Verbindungsbeschlag mit zwei ineinandergreifenden erfindungsgemäßen Beschlagteilen;
- Fign. 5a-5c: den in Fig. 4 gezeigten Verbindungsbeschlag mit jeweils unterschiedlichem Querversatz der beiden Beschlagteile;
- Fign. 6a, 6b: eine erfindungsgemäße Möbelanordnung mit zwei Möbelteilen, die mittels des erfindungsgemäßen Verbindungsbeschlags miteinander verbunden sind;
- Fign. 7a, 7b: eine erfindungsgemäße Möbelanordnung mit zwei Möbelteilen, die mittels des erfindungsgemäßen Verbindungsbeschlags mit einem Spaltmaß von 4 mm angeordnet sind; und
- Fig. 8: eine Möbelanordnung mit drei Möbelteilen, wobei das mittlere Möbelteil mit jeweils zwei erfindungsgemäßen Verbindungsbeschlägen an den beiden anderen Möbelteilen befestigt ist.

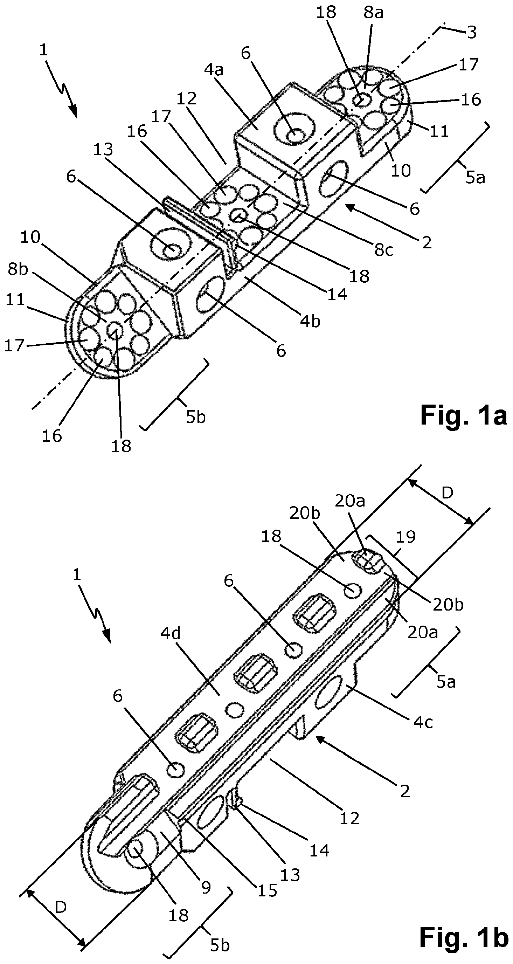

Das in **Fign. 1a-1f** gezeigte Beschlagteil 1 dient zum Verbinden verschieden orientierter Möbelteile. Das Beschlagteil 1 weist einen zumindest abschnittsweise quaderförmigen, länglichen Grundkörper **2** mit einer Längsachse **3,** mit vier jeweils paarweise parallelen Längsseiten **4a-4d** und mit zwei Längsenden **5a, 5b** auf. Zumindest eine der vier Längsseiten 4a-4d bildet eine plane Befestigungsfläche aus, mit der das Beschlagteil 1 an einem Möbelteil anliegt und daran befestigt werden kann. Im gezeigten Ausführungsbeispiel bilden alle vier Längsseiten 4a-4d jeweils eine plane Befestigungsfläche aus, mit der das Beschlagteil 1 an einem Möbelteil befestigt werden kann. Dazu weist jede Längsseite des Grundkörpers 2, welche eine Befestigungsfläche ausbildet, ein oder mehrere, hier zwei Durchgangslöcher **6** (z.B. im 32mm-Raster) auf.

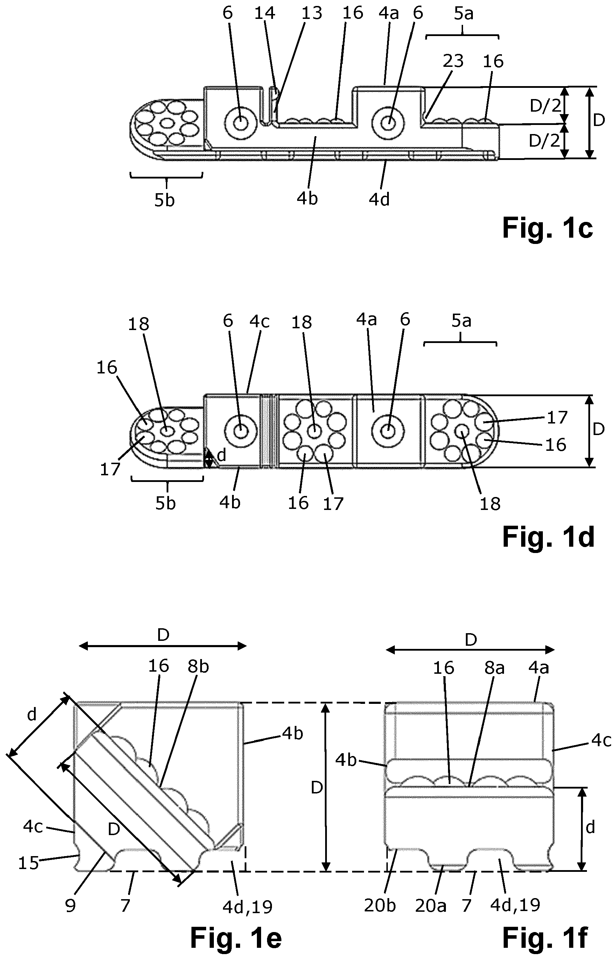

Wie in Fign. 1e und 1f gezeigt, weist der Grundkörper 2, gesehen in Richtung der Längsachse 3, eine Außenkontur mit einem gestrichelt dargestellten umhüllenden Quadrat **7** mit Kantenlänge **D** auf.

Der Grundkörper 2 weist an seinem einen, ersten Längsende 5a eine erste Montagefläche **8a** und an seinem anderen, zweiten Längsende 5b eine zweite Montagefläche **8b** auf, wobei die Montageflächen 8a, 8b jeweils durch einen Absatz des Grundkörpers 2 gebildet sind. Die erste Montagefläche 8a ist zu den Längsseiten 4a, 4d parallel und zu den Längsseiten 4b, 4c rechtwinklig angeordnet. Die zweite Montagefläche 8b ist gegenüber den Längsseiten 4a-4d jeweils um die Längsachse 3 geneigt, hier lediglich beispielhaft jeweils unter 45°. Die erste und die zweite Montagefläche 8a, 8b sind gegeneinander um die Längsachse 3 um 45° verdreht angeordnet, wobei die Längsachse 3 des Grundkörpers 2 in der Ebene der ersten und zweiten Montageflächen 8a, 8b liegt.

Die der ersten Montagefläche 8a gegenüberliegende Rückseite des ersten Längsendes 5a ist durch die zur ersten Montagefläche 8a parallele Längsseite 4d gebildet. Die der zweiten Montagefläche 8b gegenüberliegende Rückseite des zweiten Längsendes 5b ist hingegen durch eine zur zweiten Montagefläche 8b parallele separate Rückseite **9** gebildet. Die Dicke der Längsenden 5a, 5b, also im Fall des ersten Längsendes 5a der Abstand der ersten Montagefläche 8a zur Längsseite 4d und im Fall des zweiten Längsendes 5b der Abstand der zweiten Montagefläche 8b zur Rückseite 9, entspricht der halben Kantenlänge D des Grundkörpers 2, also D/2 (Fig. 1c). Die Längsenden 5a, 5b weisen, gesehen in Richtung der Längsachse 3, jeweils einen inneren Abschnitt **10**, dessen Breite gleich der Kantenlänge D des Grundkörpers 2 ist (Fig. 1e), und einen sich daran außen anschließenden, stirnseitig verrundeten, äußeren Abschnitt **11** auf.

Der Grundkörper 2 weist außerdem, vorzugsweise mittig, zwischen seinen beiden Längsenden 5a, 5b eine durch den Nutboden einer beidseitig offenen Quernut **12** gebildete, dritte Montagefläche **8c** auf, die zu den Längsseiten 4a, 4d parallel und zu den Längsseiten 4b, 4c rechtwinklig angeordnet ist. Die erste und die dritte Montagefläche 8a, 8c sind in der gleichen Ebene angeordnet, so dass die Längsachse 3 auch in der Ebene der dritten Montagefläche 8c liegt. Die sich in Richtung der Längsachse 3 erstreckende Nutbreite und die sich quer zur Längsachse 3 erstreckende Nutlänge der Quernut 12 sind gleich groß wie die Kantenlänge D.

Die eine der beiden Nutwände der Quernut 12 ist durch einen am Nutboden angebundenen Federsteg **13** gebildet, der an seinem freien Stegende ein Rastelement **14** aufweist, hier z.B. in Form eines quer zur Längsachse 3 verlaufenden Profilvorsprungs. An einer (4c) der beiden Längsseiten 4b, 4c, zu der die Quernut 11 quer zur Längsachse 3 offen ist, weist der Grundkörper 2 ein zu dem Rastelement 14 des Federstegs 13 komplementäres Rastelement **15** auf, hier z.B. in Form einer längs der gesamten Längsseite 4c verlaufenden Profilmulde.

Die erste, die zweite und die dritte Montagefläche 8a-8c weisen jeweils die gleiche Rastanordnung von mehreren, um ein Zentrum herum angeordneten Rastelementen auf, hier z.B. in Form von Rastvorsprüngen und -ausnehmungen **16**, **17.** Die Rastanordnung hat bezüglich des Zentrums eine mehrzählige Drehsymmetrie und ist hier ein Kreis, auf dem abwechselnd Rastvorsprünge 16 und -ausnehmungen 17 in 45°-Winkelabständen angeordnet sind, wodurch sich eine hier vierzählige Drehsymmetrie ergibt. Das Zentrum der Rastanordnung ist durch ein Durchgangsloch **18** in der jeweiligen Montagefläche 8a-8c gebildet.

Der Grundkörper 2 weist ferner eine durch die Längsseite 4d gebildete, vierte Montagefläche **8d** mit einem, gesehen in Querrichtung, kammförmigen Oberflächenprofil **19** auf. Das kammförmige Oberflächenprofil 19 weist abwechselnd hohe und tiefe Kammprofilabsätze **20a**, **20b** mit jeweils gleicher Profilbreite auf.

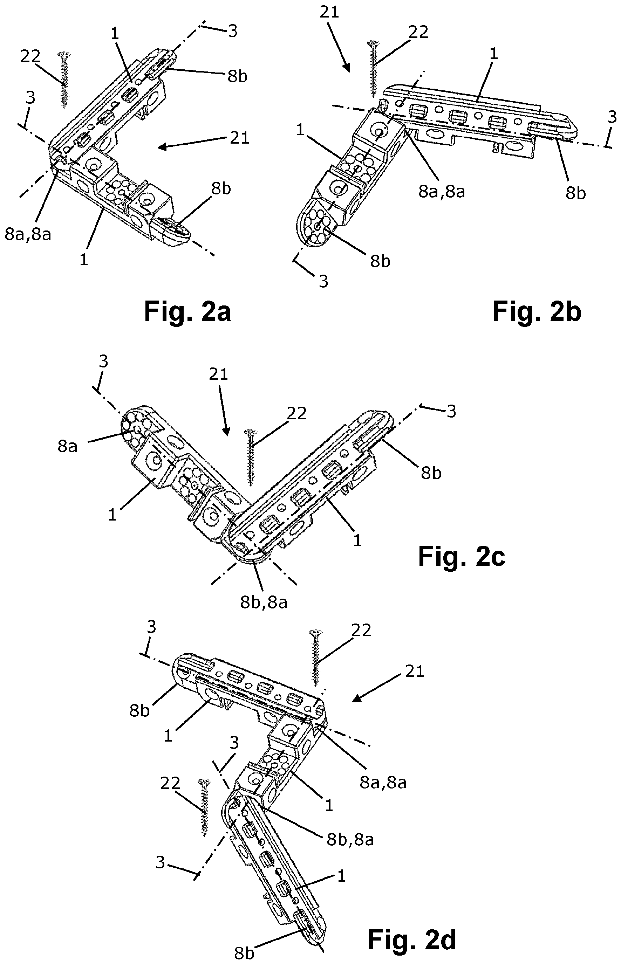

Fign. 2a-2f zeigen einen Verbindungsbeschlag **21** mit zwei oder drei Beschlagteilen 1, die mittels ihrer ersten, zweiten oder dritten Montageflächen 8a-8c aneinander anliegen und optional mittels Schrauben **22** miteinander verbunden sind.

In **Fig. 2a** sind zwei Beschlagteile 1 mit ihren Längsachsen 3 rechtwinklig zueinander ausgerichtet und liegen mit ihren ersten Montageflächen 8a aneinander an.

In **Fig. 2b** sind zwei Beschlagteile 1 mit ihren Längsachsen 3 unter 135° zueinander ausgerichtet und liegen mit ihren ersten Montageflächen 8a aneinander an.

In **Fig. 2c** sind zwei Beschlagteile 1 mit ihren Längsachsen 3 rechtwinklig zueinander ausgerichtet und liegen mit einer ersten und einer zweiten Montageflächen 8a, 8b aneinander an.

In **Fig. 2d** sind drei Beschlagteile 1 mit ihren Längsachsen 3 zickzackförmig zueinander ausgerichtet. Das in Fig. 2d obere und das mittlere Beschlagteil 1 sind mit ihren Längsachsen 3 rechtwinklig zueinander ausgerichtet und liegen mit ihren ersten Montageflächen 8a, 8a aneinander an. Das untere und das mittlere Beschlagteil 1 sind mit ihren Längsachsen 3 unter 135° zueinander ausgerichtet und liegen mit einer ersten und einer zweiten Montageflächen 8a, 8b aneinander an.

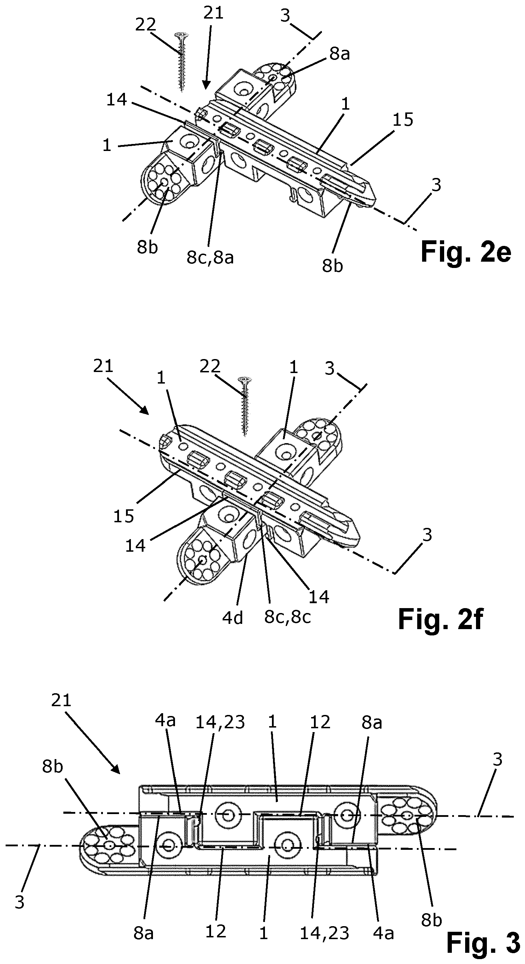

In **Fig. 2e** sind zwei Beschlagteile 1 mit ihren Längsachsen 3 rechtwinklig zueinander ausgerichtet und liegen mit einer ersten und einer dritten Montageflächen 8a, 8c aneinander an. Dabei greift der Profilvorsprung 14 des Federstegs 13 des einen Beschlagteils 1 in die Profilmulde 15 des anderen Beschlagteils 1 ein, wodurch die beiden Beschlagteile 1 miteinander verrastet sind.

In **Fig. 2f** sind zwei Beschlagteile 1 mit ihren Längsachsen 3 rechtwinklig zueinander ausgerichtet und liegen mit ihren dritten Montageflächen 8c, 8c aneinander an, indem die gegeneinander um 90° verdreht angeordneten Quernuten 12 der beiden Beschlagteile 1 ineinandergesteckt sind. Dabei greift einerseits der Profilvorsprung 14 des Federstegs 13 des in Fig. 2f unteren Beschlagteils 1 in die Profilmulde 15 des oberen Beschlagteils 1, und andererseits hintergreift bzw. untergreift der Profilvorsprung 14 des Federstegs 13 des oberen Beschlagteils 1 den unteren Absatz 20b der Längsseite 4d des unteren Beschlagteils 1, wodurch die beiden Beschlagteile 1 miteinander doppelt verrastet sind.

In den Fign. 2a-2f greifen die Rastvorsprünge und -ausnehmungen 16, 17 der in gewünschter Winkelausrichtung aneinander anliegenden Montageflächen jeweils ineinander ein. Eine Schraube 22 ist durch die Durchgangslöcher 18 der aneinander anliegenden Montageflächen geschraubt, wodurch die Montageflächen und somit die beiden Beschlagteile 1 in ihrer verrasteten Winkelausrichtung gesichert sind.

**Fig. 3** zeigt einen Verbindungsbeschlag 21 mit zwei Beschlagteilen 1, die mit ihren Längsachsen 3 parallel zueinander ausgerichtet sind und mit ihren Längsseiten 4a ineinandergesteckt sind. Die Längsseiten 4a der Beschlagteile 1 weisen aufgrund der zurückgestuften ersten Montagefläche 8a und der Quernut 12, deren Nutboden sich auf gleicher Höhe wie die erste Montagefläche 8a befindet, ein kammförmiges Steckprofil auf. Die beiden Beschlagteile 1 sind mit ihren kammförmigen Steckprofilen ineinandergesteckt. Dabei greift die Profilvorsprung 14 am Federsteg 13 des einen Beschlagteils in eine Rastmulde **23** (Fig. 1c) des anderen Beschlagteils, die an der stirnseitigen Stufe zwischen der ersten Montagefläche 8a und der Längsseite 4a vorhanden ist, wodurch die beiden Beschlagteile 1 miteinander doppelt verrastet sind. Befestigungsschrauben 22 können durch die Durchgangslöcher 6, 18 geschraubt werden, um die beiden Beschlagteile 1 aneinander zu befestigen. Dieser Verbindungsbeschlag 21 kann beispielsweise als Aufdopplungsbeschlag zweier Möbelplatten eingesetzt werden.

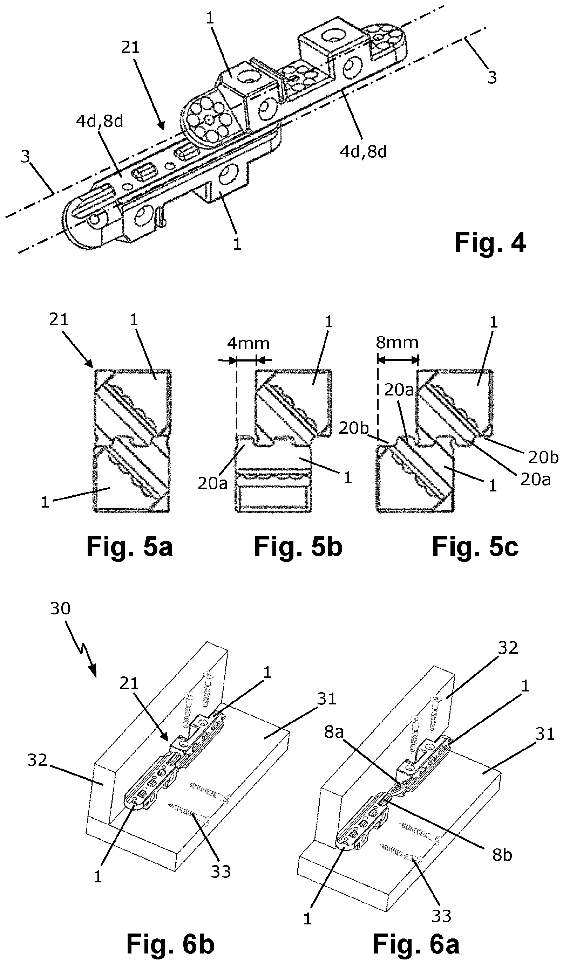

**Fig. 4** zeigt einen Verbindungsbeschlag 21 mit zwei Beschlagteilen 1, die mit ihren Längsachsen 3 parallel zueinander ausgerichtet sind und mit ihren kammförmigen Montageflächen 8d ineinandergreifen. Dabei greifen die hohen Kammprofilabsätze 20a des einen Beschlagteils 1 in die tiefen Kammprofilabsätze 20b des anderen Beschlagteils 1 ein. Wie in **Fign. 5a-5c** gezeigt, können die Beschlagteile 1 je nach dem, welche hohen und tiefen Kammprofilabsätze 20a, 20b ineinandergreifen, mit unterschiedlichem Querversatz von 0 mm (Fig. 5a), 4 mm (Fig. 5b) oder 8 mm (Fig. 5c) versetzt sein. Um den Querversatz von 4 mm zu erreichen, ist in Fig. 5b das untere Beschlagteil 1 gegenüber Fign. 5a, 5c seitenverkehrt bzw. um 180° gewendet angeordnet.

Statt in Querrichtung beidseitig offen, wie in den Ausführungsbeispielen gezeigt, kann die Quernut 12 alternativ in Querrichtung auch nur einseitig offen sein. Statt des in den Ausführungsbeispielen gezeigten, umhüllenden Quadrats 7 kann der Grundkörper, gesehen in Richtung der Längsachse 3, auch eine Außenkontur mit einem umhüllenden Rechteck oder Polygon aufweisen. Statt der in den Ausführungsbeispielen gezeigten, vier Längsseiten 4a-4d kann der Grundkörper 2 auch weniger Längsseiten aufweisen, also beispielsweise auch nur eine, zwei oder drei Längsseiten. Statt der in den Ausführungsbeispielen gezeigten, vier Montageflächen 8a, 8b kann der Grundkörper 2 auch weniger Montageflächen aufweisen, also beispielsweise auch nur eine, zwei oder drei Montageflächen. Statt an ein Teil anzuschrauben, kann die Befestigungsfläche des Beschlagteil 1 auch an das Teil angeklebt werden.

Zusätzlich kann mit nur einem einzigen Beschlagteil 1 eine Eckverbindung zwischen zwei Teilen ausgebildet werden, indem zwei rechtwinklige Längsseiten jeweils an die Teile angeschraubt werden.

In den Fign. 1 bis 5 sind die an den jeweiligen Beschlagteilen 1 befestigten Teile nicht gezeigt. Die Teile können beispielsweise unter 45°, 90°, 135° oder 180° zueinander orientiert sein oder einen T-Stoß ausbilden.

In **Fign. 6a, 6b** ist eine Möbelanordnung **30** mit zwei rechtwinklig aufeinander stehenden, plattenförmigen Möbelteilen **31**, **32** gezeigt, die mittels des Verbindungsbeschlags 21 miteinander verbunden sind. Wie in Fig. 6a gezeigt, werden das eine, erste Beschlagteil 1 und das andere, zweite Beschlagteil 1 jeweils mit ihrer Längsseite 4a an das eine, erste Möbelteil 31 bzw. an das andere, zweite Möbelteil 32 mittels Schrauben **33** angeschraubt, die durch die Durchgangslöcher 6 gehen. Anschließend werden die rechtwinklig aufeinander stehenden Möbelteile 31, 32 - bei parallel zueinander ausgerichteten Längsachsen 3 der beiden Beschlagteile 1 - verschoben, bis die schrägen zweiten Montageflächen 8b der beiden Beschlagteile 1 aneinander anliegen und mittels der Rastelemente 16, 17 miteinander verrastet sind (Fig. 6b). Dabei untergreifen sich die zweiten Montageflächen 8b gegenseitig, wodurch die beiden Möbelteile 31, 32 zueinander fixiert sind. Insgesamt ergibt sich so eine starre und starke Eckverbindung.

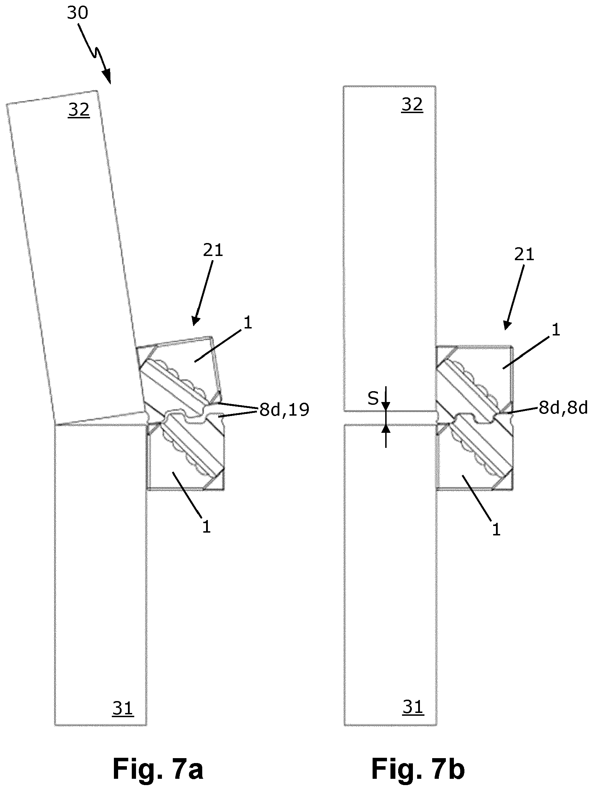

**Fign. 7a, 7b** zeigen eine Möbelanordnung 30 mit zwei Möbelteilen 31, 32, die mittels des Verbindungsbeschlags 21 auf ein Spaltmaß **s** von 4 mm eingestellt sind. Die Beschlagteile 1 sind jeweils mit ihrer Längsseite 4c an die Plattenseiten der Möbelteile 31, 32 angeschraubt, wobei das in Fig. 7 untere Beschlagteil 1 über die Oberkante des unteren Möbelteils 31 nach oben und das obere Beschlagteil 1 über die Unterkante des unteren Möbelteils 31 nach unten übersteht, und zwar mit einem dem Spaltmaß s entsprechenden Gesamtüberstand. Die beiden Möbelteile 31, 32 werden zunächst Stirnseite auf Stirnseite und Beschlagteil auf Beschlagteil 1, d.h. schräg, aufeinandergestellt (Fig. 7a). Anschließend werden die beiden Beschlagteile 31, 32 in ihre flächenbündige Lage verschwenkt, wobei, wie in Fig. 5a gezeigt, die hohen und tiefen Kammprofilabsätze 20a, 20b der beiden Beschlagteile 31, 32 ineinandergreifen (Fig. 7b). Die Schwenkachse ist durch die ineinandergreifenden Beschlagteile 1 definiert.

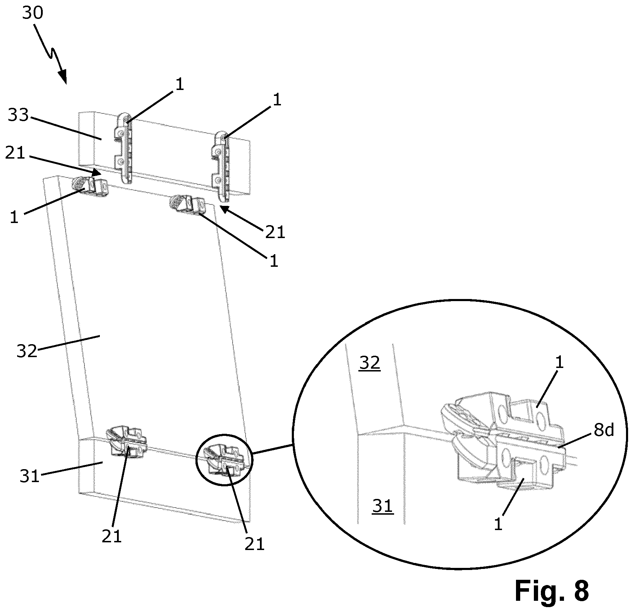

**Fig. 8** zeigt eine Möbelanordnung 30 mit drei Möbelteilen 31, 32, **33**, wobei das mittlere Möbelteil 32 mit jeweils zwei Verbindungsbeschlägen 21 an den beiden anderen Möbelteilen befestigt ist. Die beiden unteren Verbindungsbeschlägen 21 sind wie in Fig. 7 und die beiden oberen Verbindungsbeschläge 21 wie in Fig. 2e ausgerichtet und an den jeweiligen Möbelteilen befestigt. Zunächst wird das mittlere Möbelteil 32, wie in Fig. 7a gezeigt, mittels der beiden unteren Verbindungsbeschläge 21 schräg auf das untere Möbelteil 31 gestellt. Anschließend wird das mittlere Möbelteil 32 in die mit den anderen beiden Möbelteilen 31, 33 flächenbündige Lage verschwenkt, wodurch die beiden Beschlagteile 1 der oberen Verbindungsbeschläge 21 miteinander verrasten. Abschließend können die Beschlagteile 1 der Verbindungsbeschläge 21 mittels Schrauben 22 aneinander gesichert werden.

## Patentansprüche

1. Beschlagteil (1) eines Verbindungsbeschlags (21) zum Verbinden zweier Teile (31, 32, 33), insbesondere zweier Möbelteile, aufweisend einen Grundkörper (2) mit einer Längsachse (3), mit mindestens einer Längsseite (4a-4d), die eine plane Befestigungsfläche zur Anlage und Befestigung an einem zu verbindenden Teil (31, 32, 33) ausbildet, und mit mindestens einer Montagefläche zur Anlage an einer Gegenmontagefläche eines weiteren Beschlagteils des Verbindungsbeschlags (21),
wobei der Grundkörper (2) mindestens eine der folgenden Montageflächen (8a-8d) aufweist:
- eine an einem ersten Längsende (5a) des Grundkörpers (2) angeordnete, erste Montagefläche (8a), die zu der Befestigungsfläche parallel oder winklig, insbesondere rechtwinklig, angeordnet ist und mindestens ein Rastelement (17, 18) aufweist,
- eine an einem zweiten Längsende (5b) des Grundkörpers (2) angeordnete, zweite Montagefläche (8b), die gegenüber der Befestigungsfläche um die Längsachse (3) oder eine dazu parallele Achse geneigt angeordnet ist und mindestens ein Rastelement (17, 18) aufweist,
- eine durch einen Nutboden einer ein- oder beidseitig offenen Quernut (12) des Grundkörpers (2) gebildete, dritte Montagefläche (8c), die zu der Befestigungsfläche parallel oder winklig, insbesondere rechtwinklig, angeordnet ist und mindestens ein Rastelement (16, 17) aufweist, und
- eine an einer weiteren Längsseite (4d) des Grundkörpers (2) gebildete, vierte Montagefläche (8d), die zu der Befestigungsfläche parallel oder rechtwinklig angeordnet ist und, gesehen in Querrichtung, ein kammförmiges Oberflächenprofil (19) aufweist, das abwechselnd hohe und tiefe Profilabsätze (20a, 20b) mit jeweils gleicher Profilbreite aufweist,
und wobei der Grundkörper (2) zumindest abschnittsweise quaderförmig mit vier Längsseiten (4a-4d) ausgebildet ist, wobei eine, mehrere oder alle vier Längsseiten (4a-4d) jeweils eine Befestigungsfläche ausbilden.

2. Beschlagteil nach Anspruch 1, **dadurch gekennzeichnet, dass**, gesehen in Richtung der Längsachse (3), der Grundkörper (2) eine Außenkontur mit einem umhüllenden Rechteck, insbesondere mit einem umhüllenden Quadrat (7), aufweist.

3. Beschlagteil nach einem der vorhergehenden Ansprüche, **dadurch gekennzeichnet, dass** die erste Montagefläche (8a) an einem ersten Längsende (5a) des Grundkörpers (2) und die zweite Montagefläche (8b) an einem zweiten Längsende (5b) des Grundkörpers (2) angeordnet sind, wobei insbesondere die erste und die zweite Montagefläche (8a, 8b) gegeneinander um die Längsachse (3) oder eine dazu parallele Achse verdreht, insbesondere um 45° verdreht, angeordnet sind.

4. Beschlagteil nach einem der vorhergehenden Ansprüche, **dadurch gekennzeichnet, dass** die erste, die zweite und/oder die dritte Montagefläche (8a-8c) jeweils die gleiche Rastanordnung von mehreren Rastelementen (16, 17) aufweisen.

5. Beschlagteil nach Anspruch 4, **dadurch gekennzeichnet, dass** die Rastanordnung mehrere, um ein Zentrum herum angeordnete Rastelementen (16, 17) aufweist und bezüglich des Zentrums eine mehrzählige, insbesondere vierzählige Drehsymmetrie aufweist, wobei insbesondere im Zentrum der Rastanordnung ein Durchgangsloch (18) der jeweiligen Montagefläche (8a-8c) angeordnet ist.

6. Beschlagteil nach Anspruch 4 oder 5, **dadurch gekennzeichnet, dass** die Rastanordnung ein Kreis ist, auf dem abwechselnd Rastvorsprünge (16) und -ausnehmungen (17) in jeweils gleichen Winkelabständen, insbesondere in 45°-Winkelabständen, angeordnet sind, wobei insbesondere im Zentrum der Rastanordnung ein Durchgangsloch (18) der jeweiligen Montagefläche (8a-8c) angeordnet ist.

7. Beschlagteil nach einem der vorhergehenden Ansprüche, **dadurch gekennzeichnet, dass** eine sich in Richtung der Längsachse (3) erstreckende Nutbreite der Quernut (12) gleich einer sich quer zur Längsachse erstreckende Nutlänge der Quernut (12) und/oder gleich der Breite des oder der Längsenden (5a, 5b) ist.

8. Beschlagteil nach einem der vorhergehenden Ansprüche, **dadurch gekennzeichnet, dass** die erste und die zweite Montagefläche (8a, 8b) jeweils durch einen Absatz des Grundkörpers (2) gebildet sind.

9. Beschlagteil nach einem der vorhergehenden Ansprüche, **dadurch gekennzeichnet, dass** die Dicke des oder der Längsenden (5a, 5b) halb so hoch wie die Dicke des Grundkörpers (2) ist und/oder dass die Breite des ersten und/oder zweiten Längsendes (5a, 5b) gleich der Breite des Grundkörpers (2) ist.

10. Beschlagteil nach einem der vorhergehenden Ansprüche, **dadurch gekennzeichnet, dass** eine der beiden Nutwände der Quernut (12) durch einen am Nutboden angebundenen Federsteg (13) gebildet ist, der an seinem freien Stegende ein Rastelement (14) aufweist, wobei insbesondere der Grundkörper (2) an einer stirnseitigen Stufe zwischen der ersten Montagefläche (8a) und einer Längsseite (4a) ein zu dem Rastelement (14) des Federstegs (13) komplementäres Rastelement (23) aufweist.

11. Beschlagteil nach Anspruch 10, **dadurch gekennzeichnet, dass** der Grundkörper (2) an einer Längsseite (4b, 4c), zu der die Quernut (12) quer zur Längsachse (3) offen ist, ein zu dem Rastelement (14) des Federstegs (13) komplementäres Rastelement (15) aufweist.

12. Beschlagteil nach einem der vorhergehenden Ansprüche, **dadurch gekennzeichnet, dass** die erste und die dritte Montagefläche (8a, 8c) an der gleichen Längsseite (4a) des Grundkörpers ausgebildet sind und, gesehen in Längsrichtung des Grundkörpers (2), ein kammförmiges Steckprofil der Längsseite (4a) ausbilden.

13. Beschlagteil nach einem der vorhergehenden Ansprüche, **dadurch gekennzeichnet, dass** die mindestens eine Längsseite (4a-4c), insbesondere jede Längsseite des Grundkörpers (2), die eine Befestigungsfläche ausbildet, mindestens ein Durchgangsloch (6), insbesondere mehrere Durchgangslöcher (6), aufweist.

14. Verbindungsbeschlag (21) mit mindestens zwei insbesondere baugleichen Beschlagteilen (1) nach einem der vorhergehenden Ansprüche.

15. Anordnung (30), insbesondere Möbelanordnung, mit zwei Teilen (31, 32), insbesondere Möbelteilen, die mittels eines Verbindungsbeschlags (21) nach Anspruch 14 miteinander verbunden sind, wobei ein erstes Beschlagteil (1) des Verbindungsbeschlags (21) mit seiner Befestigungsfläche an dem einen, ersten Teil (31) anliegt und daran befestigt ist und ein zweites Beschlagteil (1) des Verbindungsbeschlags (21) mit seiner Befestigungsfläche an dem anderen, zweiten Teil (32) anliegt und daran befestigt ist und wobei die erste, die zweite oder die dritte Montagefläche (8a-8c) des ersten Beschlagteils (1) und die erste, die zweite oder die dritte Montagefläche (8a-8c) des zweiten Beschlagteils (1) aneinander anliegen und mittels der Rastelemente (16, 17) miteinander verrastet sind oder die vierte Montagefläche (8d) des ersten Beschlagteils (1) und die vierte Montagefläche (8d) des zweiten Beschlagteils (1) aneinander anliegen und mittels der kammförmigen Oberflächenprofile (19) ineinandergreifen.

16. Anordnung nach Anspruch 15, **dadurch gekennzeichnet, dass** das erste und das zweite Beschlagteil (1) mittels Schrauben (33), welche durch Durchgangslöcher (6) der Befestigungsfläche greifen, an die Teile (31, 32) angeschraubt sind und/oder dass die erste, die zweite oder die dritte Montagefläche (8a-8c) des ersten Beschlagteils (1) und die erste, die zweite oder die dritte Montagefläche (8a-8c) des zweiten Beschlagteils (1) mittels Schrauben (22), welche durch Durchgangslöcher (18) der Montageflächen (8a-8c) greifen, aneinander angeschraubt sind.

## Claims

1. A fitting part (1) of a connection fitting (21) for connecting two parts (31, 32, 33), in particular two furniture parts, comprising a main body (2) with a longitudinal axis (3), with at least one longitudinal face (4a-4d) which forms a planar fastening face for bearing against and fastening to a part (31, 32, 33) to be connected, and with at least one mounting face for bearing against a counter-mounting face of a further fitting part of the connection fitting (21), wherein the main body (2) has at least one of the following mounting faces (8a-8d):
- a first mounting face (8a) which is disposed on a first longitudinal end (5a) of the main body (2), is arranged parallel or at an angle to the fastening face, in particular perpendicular thereto, and has at least one latching element (17, 18),
- a second mounting face (8b), which is disposed on a second longitudinal end (5b) of the main body (2), is arranged with respect to the fastening face at an inclination about the longitudinal axis (3) or an axis extending parallel thereto, and has at least one latching element (17, 18),
- a third mounting face (8c), which is formed by a groove base of a transverse groove (12) in the main body (2), said groove being open on one or both sides, is arranged parallel or at an angle to the fastening face, in particular perpendicular thereto, and has at least one latching element (16, 17), and
- a fourth mounting face (8d), which is formed on another longitudinal face (4d) of the main body (2), is arranged parallel or perpendicular to the fastening face and, when viewed in the transverse direction, has a comb-like surface profile (19), which has alternately high and low profile stepped portions (20a, 20b) with in each case the same profile width,
and wherein the main body (2) is cuboidal at least in some portions with four longitudinal faces (4a-4d), wherein one, or more or all four longitudinal faces (4a-4d) in each case form a fastening face.

2. The fitting part as claimed in claim 1, **characterized in that**, when viewed in the direction of the longitudinal axis (3), the main body (2) has an outer contour with a rectangular envelope, in particular with a square envelope (7).

3. The fitting part as claimed in one of the preceding claims, **characterized in that** the first mounting face (8a) is disposed on a first longitudinal end (5a) of the main body (2) and the second mounting face (8b) is disposed on a second longitudinal end (5b) of the main body (2), wherein in particular the first and the second mounting face (8a, 8b) are arranged so as to be rotated relative to one another about the longitudinal axis (3) or an axis parallel thereto, in particular rotated by 45°.

4. The fitting part as claimed in one of the preceding claims, **characterized in that** the first, the second and/or the third mounting faces (8a-8c) in each case have the same latching arrangement of a plurality of latching elements (16, 17).

5. The fitting part as claimed in claim 4, **characterized in that** the latching arrangement has a plurality of latching elements (16, 17) arranged around a center, and has a multiple rotational symmetry, in particular a rotational symmetry of order 4, relative to the center, wherein in particular a through-hole (18) of the respective mounting face (8a-8c) is arranged in the center of the latching arrangement.

6. The fitting part as claimed in claim 4 or 5, **characterized in that** the latching arrangement is a circle on which latching protrusions (16) and latching recesses (17) are alternately arranged in each case at equal angular spacings, in particular at 45° angular spacings, wherein in particular a through-hole (18) of the respective mounting face (8a-8c) is arranged in the center of the latching arrangement.

7. The fitting part as claimed in one of the preceding claims, **characterized in that** a groove width of the transverse groove (12) extending in the direction of the longitudinal axis (3) is equal to a groove length of the transverse groove (12) extending transversely to the longitudinal axis and/or equal to the width of the one or more longitudinal ends (5a, 5b).

8. The fitting part as claimed in one of the preceding claims, **characterized in that** the first and the second mounting face (8a, 8b) in each case are formed by a stepped portion of the main body (2).

9. The fitting part as claimed in one of the preceding claims, **characterized in that** the thickness of the one or more longitudinal ends (5a, 5b) is half as high as the thickness of the main body (2) and/or **in that** the width of the first and/or second longitudinal end (5a, 5b) is equal to the width of the main body (2).

10. The fitting part as claimed in one of the preceding claims, **characterized in that** one of the two groove walls of the transverse groove (12) is formed by a spring web (13) which is formed on the groove base and which at its free web end has a latching element (14), wherein in particular the main body (2) has a latching element (23) on the front face of the step between the first mounting face (8a) and a longitudinal face (4a), said latching element being complementary to the latching element (14) of the spring web (13).

11. The fitting part as claimed in claim 10, **characterized in that** the main body (2) has a latching element (15) on a longitudinal face (4b, 4c), the transverse groove (12) being open relative thereto transversely to the longitudinal axis (3) and said latching element being complementary to the latching element (14) of the spring web (13).

12. The fitting part as claimed in one of the preceding claims, **characterized in that** the first and the third mounting face (8a, 8c) are formed on the same longitudinal face (4a) of the main body and, when viewed in the longitudinal direction of the main body (2), form a comb-like insertion profile of the longitudinal face (4a).

13. The fitting part as claimed in one of the preceding claims, **characterized in that** the at least one longitudinal face (4a-4c), in particular each longitudinal face of the main body (2) which forms a fastening face, has at least one through-hole (6), in particular a plurality of through-holes (6).

14. A connection fitting (21) comprising at least two fitting parts (1) as claimed in one of the preceding claims, which are, in particular, structurally the same.

15. An arrangement (30), in particular a furniture arrangement comprising two parts (31, 32), in particular furniture parts, which are connected together by means of a connection fitting (21) as claimed in claim 14, wherein a first fitting part (1) of the connection fitting (21) bears with its fastening face against the one first part (31) and is fastened thereto and a second fitting part (1) of the connection fitting (21) bears with its fastening face against the other second part (32) and is fastened thereto and wherein the first, the second or the third mounting face (8a 8c) of the first fitting part (1) and the first, the second or the third mounting face (8a-8c) of the second fitting part (1) bear against one another and are latched together by means of the latching elements (16, 17), or the fourth mounting face (8d) of the first fitting part (1) and the fourth mounting face (8d) of the second fitting part (1) bear against one another and engage in one another by means of the comb-like surface profiles (19).

16. The arrangement as claimed in claim 15, **characterized in that** the first and the second fitting part (1) are screwed onto the parts (31, 32) by means of screws (33) which engage through through-holes (6) of the fastening face and/or that the first, the second or the third mounting face (8a-8c) of the first fitting part (1) and the first, the second or the third mounting face (8a-8c) of the second fitting part (1) are screwed together by means of screws (22) which engage through through-holes (18) of the mounting faces (8a-8c).

## Revendications

1. Partie (1) d'une ferrure (21) dévolue à la solidarisation de deux parties (31, 32, 33), notamment de deux parties de meuble, munie d'un corps de base (2) comportant un axe longitudinal (3), au moins une face longitudinale (4a-4d) donnant naissance à une surface plane de fixation conçue pour venir en applique contre une partie (31, 32, 33) à relier, et pour être fixée à cette dernière, et au moins une surface de montage conçue pour venir en applique contre une surface de montage complémentaire d'une autre partie de ladite ferrure de solidarisation (21),
sachant que le corps de base (2) comprend au moins l'une des surfaces de montage (8a-8d) suivantes :
- une première surface de montage (8a) qui est située à une première extrémité longitudinale (5a) dudit corps de base (2), est disposée parallèlement à la surface de fixation ou décrit un angle avec celle-ci, en particulier un angle droit, et est dotée d'au moins un élément encliquetable (17, 18),
- une deuxième surface de montage (8b) qui est située à une seconde extrémité longitudinale (5b) dudit corps de base (2), est disposée, par rapport à ladite surface de fixation, avec inclinaison autour de l'axe longitudinal (3) ou d'un axe parallèle à ce dernier, et est pourvue d'au moins un élément encliquetable (17, 18),
- une troisième surface de montage (8c) qui est formée par un fond d'une rainure transversale (12) dudit corps de base (2), ouverte sur un ou deux côté(s), est disposée parallèlement à ladite surface de fixation ou décrit un angle avec celle-ci, en particulier un angle droit, et est munie d'au moins un élément encliquetable (16, 17), et
- une quatrième surface de montage (8d) qui est ménagée sur une autre face longitudinale (4d) dudit corps de base (2), est disposée parallèlement ou perpendiculairement à ladite surface de fixation et est nantie, observée dans la direction transversale, d'un profilage de surface (19) en forme de peigne comportant des gradins profilés (20a, 20b), en alternance hauts et bas, présentant à chaque fois une même largeur de profilage,
et sachant que ledit corps de base (2) est, au moins par zones, de réalisation parallélépipédique comprenant quatre faces longitudinales (4a-4d), l'une, plusieurs ou la totalité des quatre faces longitudinales (4a-4d) donnant respectivement naissance à une surface de fixation.

2. Partie de ferrure selon la revendication 1, **caractérisée par le fait que** le corps de base (2) possède, observé dans la direction de l'axe longitudinal (3), un profil extérieur présentant un rectangle enveloppant, en particulier un parallélépipède enveloppant (7).

3. Partie de ferrure selon l'une des revendications précédentes, **caractérisée par le fait que** la première surface de montage (8a) et la deuxième surface de montage (8b) sont situées, respectivement, à une première extrémité longitudinale (5a) du corps de base (2) et à une seconde extrémité longitudinale (5b) dudit corps de base (2), sachant, en particulier, que lesdites première et deuxième surfaces de montage (8a, 8b) sont disposées avec décalage mutuel autour de l'axe longitudinal (3) ou d'un axe parallèle à ce dernier, notamment avec décalage de 45°.

4. Partie de ferrure selon l'une des revendications précédentes, **caractérisée par le fait que** la première, la deuxième et/ou la troisième surface de montage (8a-8c) comporte(nt), à chaque fois, le même agencement de crantage comptant plusieurs éléments encliquetables (16, 17).

5. Partie de ferrure selon la revendication 4, **caractérisée par le fait que** l'agencement de crantage comporte plusieurs éléments encliquetables (16, 17) disposés tout autour d'un centre et présente, par rapport audit centre, une symétrie rotatoire multiple et notamment quadruple, sachant, en particulier, qu'un trou de passage (18) de la surface de montage considérée (8a-8c) se trouve au centre dudit agencement de crantage.

6. Partie de ferrure selon la revendication 4 ou 5, **caractérisée par le fait que** l'agencement de crantage est un cercle sur lequel des saillies encliquetables (16) et des évidements d'encliquetage (17) sont implantés en alternance à des espacements angulaires respectivement identiques, notamment à des espacements angulaires de 45°, sachant, en particulier, qu'un trou de passage (18) de la surface de montage considérée (8a-8c) se trouve au centre dudit agencement de crantage.

7. Partie de ferrure selon l'une des revendications précédentes, **caractérisée par le fait qu'**une largeur de la rainure transversale (12), s'étendant dans la direction de l'axe longitudinal (3), est égale à une longueur de ladite rainure transversale (12), s'étendant transversalement par rapport audit axe longitudinal, et/ou égale à la largeur de l'extrémité ou des extrémités longitudinale(s) (5a, 5b).

8. Partie de ferrure selon l'une des revendications précédentes, **caractérisée par le fait que** les première et deuxième surfaces de montage (8a, 8b) sont formées, à chaque fois, par un gradin du corps de base (2).

9. Partie de ferrure selon l'une des revendications précédentes, **caractérisée par le fait que** l'épaisseur de l'extrémité ou des extrémités longitudinale(s) (5a, 5b) représente la moitié de l'épaisseur du corps de base (2) ; et/ou **par le fait que** la largeur de la première et/ou seconde extrémité longitudinale (5a, 5b) est égale à la largeur dudit corps de base (2).

10. Partie de ferrure selon l'une des revendications précédentes, **caractérisée par le fait que** l'une des deux parois de la rainure transversale (12) est constituée d'une membrure élastique (13) rattachée au fond de ladite rainure et munie d'un élément encliquetable (14) à son extrémité libre, sachant notamment que le corps de base (2) est pourvu, au niveau d'un décrochement frontal entre la première surface de montage (8a) et une face longitudinale (4a), d'un élément encliquetable (23) complémentaire dudit élément encliquetable (14) de la membrure élastique (13).

11. Partie de ferrure selon la revendication 10, **caractérisée par le fait que** le corps de base (2) est nanti, sur une face longitudinale (4b, 4c) vers laquelle la rainure transversale (12) est ouverte transversalement par rapport à l'axe longitudinal (3), d'un élément encliquetable (15) complémentaire de l'élément encliquetable (14) de la membrure élastique (13).

12. Partie de ferrure selon l'une des revendications précédentes, **caractérisée par le fait que** les première et troisième surfaces de montage (8a, 8c) sont ménagées sur la même face longitudinale (4a) du corps de base et donnent naissance, observées dans la direction longitudinale dudit corps de base (2), à un profilage emboîtable de ladite face longitudinale (4a) qui est configuré en un peigne.

13. Partie de ferrure selon l'une des revendications précédentes, **caractérisée par le fait que** la face longitudinale (4a-4c) à présence minimale, notamment chaque face longitudinale du corps de base (2) donnant naissance à une surface de fixation, est munie d'au moins un trou de passage (6) et de plusieurs trous de passage (6) en particulier.

14. Ferrure de solidarisation (21) équipée d'au moins deux parties (1) conformes à l'une des revendications précédentes et présentant, en particulier, des organisations structurelles identiques.

15. Agencement (30), en particulier agencement de mobilier comprenant deux parties (31, 32), notamment des parties de meuble reliées mutuellement au moyen d'une ferrure de solidarisation (21) conforme à la revendication 14, sachant qu'une première partie (1) de la ferrure de solidarisation (21) est en applique, par sa surface de fixation, contre l'une des parties, ou première partie (31) à laquelle elle est fixée, et qu'une seconde partie (1) de ladite ferrure de solidarisation (21) est en applique, par sa surface de fixation, contre l'autre partie, ou seconde partie (32) à laquelle elle est fixée, et sachant que la première, la deuxième ou la troisième surface de montage (8a-8c) de ladite première partie (1) de ferrure, et la première, la deuxième ou la troisième surface de montage (8a-8c) de ladite seconde partie (1) de ferrure, sont mutuellement en applique et sont solidarisées par encliquetage au moyen des éléments encliquetables (16, 17), ou bien la quatrième surface de montage (8d) de ladite première partie (1) de ferrure, et la quatrième surface de montage (8d) de ladite seconde partie (1) de ferrure, sont mutuellement en applique et s'interpénètrent au moyen des profilages de surface (19) en forme de peigne.

16. Agencement selon la revendication 15, **caractérisé par le fait que** les première et seconde parties (1) de ferrure sont rapportées par vissage, sur les parties (31, 32), au moyen de vis (33) traversant des trous de passage (6) de la surface de fixation ; et /ou **par le fait que** la première, la deuxième ou la troisième surface de montage (8a-8c) de ladite première partie (1) de ferrure, et la première, la deuxième ou la troisième surface de montage (8a-8c) de ladite seconde partie (1) de ferrure sont rapportées par vissage, les unes sur les autres, au moyen de vis (22) traversant des trous de passage (18) desdites surfaces de montage (8a-8c).
